Europäisches Patentamt

European Patent Office

Office européen des brevets

(19)

(11) Veröffentlichungsnummer : **0 064 656**
**B1**

(12) # EUROPÄISCHE PATENTSCHRIFT

(45) Veröffentlichungstag der Patentschrift :
**18.09.85**

(51) Int. Cl.⁴ : **H 01 M 10/39**

(21) Anmeldenummer : **82103506.0**

(22) Anmeldetag : **26.04.82**

(54) Elektrochemische Speicherzelle.

(30) Priorität : **02.05.81 DE 3117383**

(43) Veröffentlichungstag der Anmeldung :
**17.11.82 Patentblatt 82/46**

(45) Bekanntmachung des Hinweises auf die Patenterteilung : **18.09.85 Patentblatt 85/38**

(84) Benannte Vertragsstaaten :
**BE FR GB IT NL**

(56) Entgegenhaltungen :
**EP-A- 0 018 190**
**FR-A- 2 315 778**
**FR-A- 2 327 647**
**GB-A- 1 502 693**
**US-A- 4 105 834**
**US-A- 4 197 363**

(73) Patentinhaber : **BROWN, BOVERI & CIE Aktiengesellschaft
Kallstadter Strasse 1
D-6800 Mannheim 31 (DE)**

(72) Erfinder : **Hug, Kuno
Steinbachweg 14
D-6900 Heidelberg (DE)**
Erfinder : **Knödler, Reinhard, Dr. Dipl.-Phys.
Heinrich-Fuchs-Strasse 122
D-6900 Heidelberg (DE)**

(74) Vertreter : **Kempe, Wolfgang, Dr. et al
c/o Brown, Boveri & Cie AG Postfach 351
D-6800 Mannheim 1 (DE)**

**Beschreibung**

Die Erfindung bezieht sich auf eine elektrochemische Speicherzelle gemäß dem Oberbegriff des Patentanspruches 1.

Solche wiederaufladbaren elektrochemischen Speicherzellen mit Festelektrolyten eignen sich sehr gut zum Aufbau von Akkumulatoren hoher Energie- und Leistungsdichte. Die in den Alkali/Chalkogen-Speicherzellen verwendeten Festelektrolyten, die beispielsweise aus Beta-Aluminiumoxid gefertigt sind, zeichnen sich dadurch aus, daß die Teilleitfähigkeit des beweglichen lons sehr hoch und die Teilleitfähigkeit der Elektronen um viele Zenerpotenzen kleiner ist. Durch die Verwendung solcher Festelektrolyten für den Aufbau von elektrochemischen Speicherzellen wird erreicht, daß praktisch keine Selbstentladung stattfindet, da die Elektronenleitfähigkeit vernachlässigbar ist und die Reaktionssubstanzen auch nicht als neutrale Teilchen durch den Festelektrolyten gelangen können.

Ein spezielles Beispiel für solche wiederaufladbaren elektrochemischen Speicherzellen sind die auf der Basis von Natrium und Schwefel, deren Festelektrolyt aus Beta-Aluminiumoxid gefertigt ist. Ein Vorteil dieser elektrochemischen Speicherzellen besteht darin, daß beim Laden der Speicherzellen keine Nebenreaktionen auftreten. Der Grund dafür ist wiederum, daß nur eine lonensorte durch den Festelektrolyten gelangen kann. Die Stromausbeute einer solchen Natrium/Schwefel-Speicherzelle liegt daher etwa bei 100 %. Bei diesen elektrochemischen Speicherzellen ist das Verhältnis von Energieinhalt zum Gesamtgewicht einer solchen Speicherzelle im Vergleich zum Bleiakkumulator sehr hoch, da die Reaktionsstoffe leicht sind und bei der elektrochemischen Reaktion viel Energie frei wird. Elektrochemische Speicherzellen auf der Basis von Natrium und Schwefel besitzen also gegenüber von konventionellen Akkumulatoren, wie den Bleiakkumulatoren, erhebliche Vorteile.

Von Nachteil ist bei diesen elektrochemischen Speicherzellen, daß sie zu ihrer Ladung auf hohen Betriebstemperaturen von etwa 300° bis 500 °C gehalten werden müssen, damit die hierfür erforderlichen chemischen Reaktionen in der gewünschten Weise ablaufen. Bei diesen Temperaturen treten erhebliche Probleme bei den verwendeten Materialien auf. Insbesondere kommt es zu Unverträglichkeiten zwischen den Baumaterialien, die für die Herstellung der Speicherzelle verwendet werden und den Reaktanden, insbesondere dem Natrium und dem Schwefel. Im Verschlußbereich dieser Speicherzelle, in dem die Öffnungen der beiden Reaktandenräume aneinander grenzen, kommt es trotz der sorgfältigen Abdichtung dieser Räume gegeneinander zu Korrosionserscheinungen.

In der Patentanmeldung DE-A-30 33 438.4 ist eine elektrochemische Speicherzelle beschrieben, bei der zur Ausbildung des Zellverschlusses das Thermo-Kompressionsverfahren Anwendung gefunden hat. Von Nachteil ist hierbei, daß für die Ausbildung dieses Verschlußes der Ringraum, der zwischen dem metallischen Gehäuse und dem Festelektrolyten liegt, breiter ausgebildet werden muß als normal, da der außerhalb des Festelektrolyten liegende Verschlußteil seinerseits sehr breit ist.

In der EP-A-0 018 190 ist eine elektrochemische Speicherzelle beschrieben, die mit einem becherförmigen Gehäuse ausgerüstet ist. Innerhalb desselben ist ein ebenfalls becherförmiger Festelektrolyt angeordnet, der im Bereich seines offenen Endes mit einem Isolierring verbunden ist. Der Verschluß der Speicherzelle nach außenhin erfolgt durch einen nach innen weisenden Flansch, der am oberen offenen Ende des Gehäuses der Speicherzelle befestigt ist und über ein Glaslot am Isolierring des Festelektrolyten gehaltert ist. Hierdurch wird der zwischen dem Festelektrolyten und dem Gehäuse der Speicherzelle befindliche Reaktandenraum verschlossen. Für den Verschluß des Festelektrolyten, insbesondere seines Innenraums ist ein kappenförmiges Element vorgesehen, das ebenfalls über ein Glaslot mit dem Isolierring des Festelektrolyten verbunden ist.

Aus der US-PS-4,105,834 ist ebenfalls eine becherförmige Speicherzelle bekannt, die mit einem ebenso ausgebildeten Festelektrolyten ausgerüstet ist. Der Verschluß der Speicherzelle nach außenhin erfolgt durch eine Vielzahl von ringförmigen und plattenförmig ausgebildeten Verschlußelementen, die über ein Glaslot untereinander und mit dem Gehäuse der Speicherzelle verbunden sind.

In der FR-PS-2 327 647 ist eine elektrochemische Speicherzelle auf der Basis von Natrium und Schwefel beschrieben. Das Gehäuse und der Festelektrolyt der Speicherzelle sind becherförmig gestaltet. Der Verschluß der Speicherzelle erfolgt zum einen über eine Hülse, die am oberen offenen Ende des Gehäuses angeordnet ist und einige Millimeter über dieses übersteht. Bei einer Ausführungsform ist die Hülse im Inneren des Gehäuses angeordnet und mit ihrem unteren Ende mit einem als Stromkollektor dienenden Zylinder verbunden, der in dem zwischen dem Festelektrolyten und dem Gehäuse angeordneten Reaktandenraum als Stromkollektor angeordnet ist. Der Innenraum des Festelektrolyten wird durch ein kappenförmiges Element verschlossen, das auf dem am oberen offenen Ende des Festelektrolyten angeordneten Isolierring aufgesetzt ist. Über diesem kappenförmigen Verschlußelement sind zwei weitere plattenförmige Verschlußelemente angeordnet, die über ein Federelement auf den äußeren Rand des kappenförmigen Verschlußelementes drücken und dieses dadurch in seiner Position halten. Eines der plattenförmigen Verschlußelemente ist mit einem nach oben weisenden Rand versehen und mit der eingangs erwähnten Hülse verbunden.

Aus der GB-PS-1 502 693 ist eine elektrochemische Speicherzelle bekannt, die nach außenhin durch ein Gehäuse begrenzt ist und im Inneren einen Festelektrolyten aufweist. Der Festelektrolyt ist an seinem oberen offenen Ende über ein Glaslot mit einem Isolierring verbunden. Dieser ist über ein Glaslot an der Innenfläche des metallischen Gehäuses der Speicherzelle befestigt.

Der Erfindung liegt deshalb die Aufgabe zugrunde eine elektrochemische Speicherzelle zu schaffen, bei der für die Ausbildung des Zellverschlußes unter Verwendung des Thermo-Kompressionsverfahrens eine Verbreiterung des Ringraumes zwischen dem Metallgehäuse und dem Festelektrolyten vermieden wird.

Diese Aufgabe wird erfindungsgemäß durch die kennzeichnenden Merkmale des Patentanspruches 1 oder 2 gelöst.

Erfindungsgemäß wird jedes Verschlußelement unter zwischenfügen mindestens eine Aluminium-Ringscheibe auf die Oberseite des aus Alpha-Aluminiumoxid gefertigten Isolierrings aufgelegt und mit diesem durch Anwendung des Thermo-Kompressionsverfahrens kraftschlüssig verbunden.

Bei einer Ausführungsform der Erfindung sind die beiden Verschlußelement aus Edelstahl gefertigt. Das erste Verschlußelement ist als Zylinder ausgebildet, der einseitig mit einem nach innen weisenden Flansch versehen ist. Die Breite dieses Flansches ist so gewählt, daß er mindestens den Zwischenraum zwischen dem Festelektrolyten und dem Gehäuse überdeckt. Der Flansch des ersten Verschlußelementes ist über die Aluminium-Ringscheibe auf den Isolierring des Festelektrolyten aufgelegt und kraftschlüssig damit verbunden. Die Außenfläche des Zylinders ist kraftschlüssig mit der Innenfläche des metallischen Gehäuses verbunden. Das zweite Verschlußelement ist als Ringscheibe ausgebildet. Der Durchmesser der Ringscheibe ist so groß gewählt, daß durch das zweite Verschlußelement mindestens der Innenraum des Festelektrolyten überdeckt ist. Der äußere Rand der Ringscheibe ist auf der zweiten auf dem Isolierring aufliegenden Aluminium-Ringscheibe aufgelegt und über diese kraftschlüssig mit dem Isolierring verbunden.

Durch die Anordnung von Aluminium-Ringscheiben zwischen jedem der beiden Verschlußelemente und dem Isolierring ist eine kraftschlüssige Verbindung der Elemente unter Zuhilfenahme des bereits bekannten Thermokompressionsverfahrens möglich. Hierdurch wird ein Verschluß geschaffen, der insbesondere bei den in der Speicherzelle herrschenden Temperaturen und den sich bildenden Reaktionsstoffen dauerhaft beständig ist. Die beiden über jeweils eine Aluminium-Ringscheibe mit dem Isolierring des Festelektrolyten verbundenen Verschlußelemente sind vorzugsweise aus Edelstahl gefertigt. Da wie bereits oben erwähnt das erste Verschlußelement mit dem Gehäuse und das zweite Verschlußelement mit dem stabförmigen Stromabnehmer verbunden ist, müssen die beiden Verschlußelemente gegeneinander isoliert werden. Dies geschieht durch eine Lippe, die auf der Oberseite des Isolierrings angeformt ist. Die Lippe ist etwa mittig auf dem Isolierring angeordnet und rundum geführt. Die äußeren Begrenzungskanten der Verschlußelemente sind von beiden Seiten bis an diese Lippe herangeführt. Die Lippe ist ebenfalls aus Alpha-Aluminiumoxid gefertigt, so daß zwischen den beiden Verschlußelementen keine elektrisch leitende Verbindung möglich ist.

Bei einer Ausführungsform der Erfindung ist der Isolierring an seiner nach außen weisenden Seite mit einer Ausnehmung versehen. In dieser Ausnehmung kann das für die Durchführung des Thermo-Kompressionsverfahrens notwendige Bond-Werkzeug abgestützt werden.

Bei einer weiteren Ausführungsform der Erfindung sind beide Verschlußelemente aus Aluminium gefertigt. Hierbei wird das zweite Verschlußelement direkt auf den Isolierring des Festelektrolyten aufgelegt und mit Hilfe des Thermo-Kompressionsverfahrens kraftschlüssig mit diesem verbunden. Das erste Verschlußelement wird unter zwischenfügen einer alpha-Aluminiumoxydringscheibe auf das zweite Verschlußelement aufgelegt und ebenfalls durch Anwendung des Thermo-Kompressionsverfahrens kraftschlüssig mit diesem verbunden.

In vorteilhafter Weise kann eine Speicherzelle mit einem solchen Verschluß mit einem geringeren Durchmesser hergestellt, und unter Zuhilfenahme des Thermo-Kompressionsverfahrens verschlossen werden, als es bei herkömmlichen Speicherzellen möglich ist. Dies ist besonders bei inversen Speicherzellen, bei denen der Schwefel innerhalb des Festelektrolyten und das Natrium innerhalb des Ringraumes angeordnet ist, sehr wichtig, da hierbei wegen der geringeren Zellkapazität der Durchmesser des Metallgehäuses bei Verwendung der erfindungsgemäßen Speicherzelle beträchtlich kleiner gemacht werden kann.

Durch den geringeren Durchmesser der Speicherzellen ist es außerdem möglich, eine größere Anzahl von Speicherzellen in einer Batterie unterzubringen, beziehungsweise die Batterie kann bei gleichbleibender Anzahl von Speicherzellen kleiner ausgebildet werden. Ein weiterer Vorteil ergibt sich bei der erfindungsgemäßen Speicherzelle für die Verbindung des Isolierrings mit dem Festelektrolyten. Da der Isolierring aus Alpha-Aluminiumoxid gefertigt ist, wird er vorzugsweise durch ein Glaslot am Festelektrolyten befestigt. Da bei den hier beschriebenen Ausführungsformen der erfindungsgemäßen Speicherzelle die Verschlußelemente alle mit der Oberseite des Isolierrings verbunden sind, braucht die Unterseite des Isolierrings nach der Anglasung nicht mehr so sorgfältig wie bisher von dem Glaslot gereinigt zu werden, da dort keine weiteren Bauteile der Speicherzelle befestigt werden.

Ein weiterer Vorteil der erfindungsgemäßen Speicherzelle ergibt sich für die Groß-Serien-Herstellung. Bei der Ausbildung des Verschlusses müssen die Metallteile nur von einer Seite zugeführt werden. Das Gleiche gilt für die Ausübung der Druckkraft, die bei der Verbindung der Bauteile durch das Thermo-Kompressionsverfahren erforderlich ist.

Nachfolgend wird die Erfindung anhand von Zeichnungen erläutert.

Es zeigen :

Figur 1 eine Speicherzelle im Vertikalschnitt,
Figur 2 eine Variante der in Figur 1 gezeigten Speicherzelle ebenfalls im Vertikalschnitt.

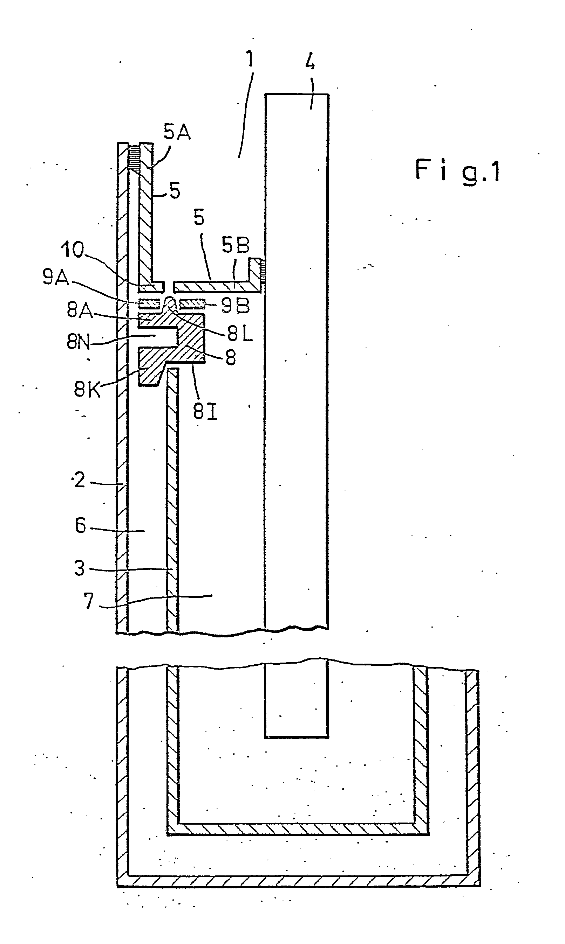

Die in Figur 1 dargestellte elektrochemische Speicherzelle 1 wird im wesentlichen aus einem becherförmigen Gehäuse 2, einem Festelektrolyten 3, einem Stromabnehmer 4 und einem Verschluß 5 gebildet. Das becherförmige Gehäuse 2 ist aus Metall hergestellt und als einseitig geschlossenes Rohr ausgebildet. Im Inneren dieses Gehäuses ist der ebenfalls becherförmig ausgebildete Festelektrolyt angeordnet. Die hier gezeigte Ausführungsform des Festelektrolyten 3 ist aus Beta-Aluminiumoxid hergestellt. Die Abmessungen des Festelektrolyten 3 sind so gewählt, daß zwischen seinen Aussenflächen und den Innenflächen des metallischen Gehäuses 2 ein zusammenhängender Zwischenraum 6 gebildet wird, der als einer der Reaktandenräume dient. Der Innenraum 7 des Festelektrolyten 3 bildet bei dem hier beschriebenen Ausführungsbeispiel den zweiten Reaktandenraum. Die Höhe des Festelektrolyten 3 ist geringfügig kleiner gewählt als die Höhe des Gehäuses 2. An seinem offenen Ende ist der Festelektrolyt mit einem Isolierring 8 versehen. Dieser ist aus Alpha-Aluminiumoxid hergestellt und mittels eines Glaslotes (hier nicht dargestellt) an dem Festelektrolyten 3 befestigt. Der Isolierring 8 ist so auf den Festelektrolyten 3 aufgesetzt, daß er einen nach innen und aussen weisenden Flansch 8 A beziehungsweise 8 I bildet. Der Isolierring 8 ist zusätzlich mit einer nach unten weisenden Kante 8 K versehen. Mit deren Hilfe ist eine genaue Zentrierung des Isolierringes 8 auf dem Festelektrolyten 3 möglich. Erst wenn die Kante 8 K exakt an der Aussenfläche des Festelektrolyten 3 anliegt, ist die gewünschte Position des Isolierringes 8 auf dem Festelektrolyten 3 erreicht. An seiner nach aussen weisenden Seitenfläche ist der Isolierring 8 mit einer Ausnehmung 8 N versehen. Diese ist für die Ausbildung des Zellverschlußes mit dem Thermo-Kompressionsverfahren erforderlich. In der Ausnehmung 8 N kann das für die Durchführung des Thermo-Kompressionsverfahrens notwendige Bond-Werkzeug abgestützt werden. Auf seiner nach oben weisenden Seite ist der Isolierring 8 mittig mit einer rundum geführten Lippe 8 L versehen. Beidseitig der Lippe ist jeweils ein Aluminiumring 9 A beziehungsweise 9 B auf den Isolierring 8 aufgelegt.

Der Verschluß 5 der Speicherzelle wird durch zwei Verschlußelemente 5 A und 5 B gebildet. Das erste Verschlußelement 5 A hat teilweise die Form eines Zylinders, der einen nach innen weisenden Flansch 10 besitzt. Dieser bildet den plattenförmigen Teil des Verschlußelementes 5 A. Der Aussendurchmesser des Zylinders ist an den Innendurchmesser des Gehäuses 2 angepaßt. Die Breite des Flansches 10 ist so gewählt, daß der zwischen dem Gehäuse 2 und dem Festelektrolyten 3 gebildete Zwischenraum 6 mindestens überdeckt wird. Vorzugsweise ist der Flansch 10 so breit gewählt, daß er bis zur Lippe 8 L des Isolierringes 8 reicht. Die Höhe des Verschlußelementes 5 A insbesondere des Zylinders richtet sich nach dem Abstand zwischen dem oberen Ende des Gehäuses 2 und der Oberfläche des Isolierringes 8. Die Aussenflächen des Zylinders 5 A sind mit den Innenflächen des Gehäuses 2 kraftschlüssig verbunden. Insbesondere ist der Zylinder 5 A mit den Innenflächen des Gehäuses 2 verschweißt. Der Flansch 10 ist auf den Aluminiumring 9 A aufgesetzt und durch das Thermo-Kompressionsverfahren kraftschlüssig mit dem Isolierring 8 verbunden. Wie bereits oben erwähnt, weist der Verschluß 5 der Speicherzelle 1 ein zweites Verschlußelement 5 B auf. Dieses wird durch eine Ringscheibe gebildet. Der Durchmesser dieser Ringscheibe ist so groß gewählt, daß der Innenraum 7 des Festelektrolyten 3 vollständig überdeckt wird.

Vorzugsweise wird der Durchmesser der Ringscheibe 5 B so gewählt, daß ihre Aussenkante bis zur Lippe 8 L des Isolierringes 8 reicht. Mit ihrem nach unten weisenden Rand ist die Ringscheibe 5 B auf den Aluminiumring 9 B aufgesetzt und unter Anwendung des Thermo-Kompressionsverfahrens mit dem Isolierring 8 kraftschlüssig verbunden. Die Ringscheibe 5 B wird mittig von dem Stromabnehmer 4 durchsetzt, der in den Festelektrolyten 3 hineinragt und über den Verschluß 5 nach aussen übersteht. Die Ringscheibe 5 B ist kraftschlüssig mit dem Stromabnehmer 4 verbunden. Zur Ausbildung einer optimalen Zellabdichtung ist der Rand der Ringscheibe, der an den Stromabnehmer 4 angrenzt geringfügig nach oben gezogen. Die beiden Verschlußelemente 5 A und 5 B müssen für den Fall, daß das Gehäuse 2 als Stromabnehmer dient gegeneinander elektrisch isoliert sein. Dies geschieht durch die Lippe 8 L, die an den Isolierring 8 angeformt ist. Sie besteht ebenfalls aus Alpha-Aluminiumoxid und trennt die beiden Verschlußelemente 5 A und 5 B, die von beiden Seiten an sie herangeführt sind. Bei dem hier gezeigten Ausführungsbeispiel sind das Gehäuse 2 und der Verschluß 5 aus Edelstahl gefertigt. Bei dem Stromabnehmer 4 handelt es sich um einen aus Metall gefertigten Stab. Bei dem hier gezeigten Ausführungsbeispiel dient der Innenraum 7 des Festelektrolyten 3 als Kathodenraum und ist mit Schwefel gefüllt. Der zwischen dem Gehäuse 2 und dem Festelektrolyten 3 liegende Raum 6 ist mit Natrium gefüllt und dient als Anodenraum. Als anodischer Stromabnehmer fungiert hierbei das Metallgehäuse 2. Eine Vertauschung der Funktion der beiden Reaktandenräume 6 und 7 ist selbstverständlich möglich.

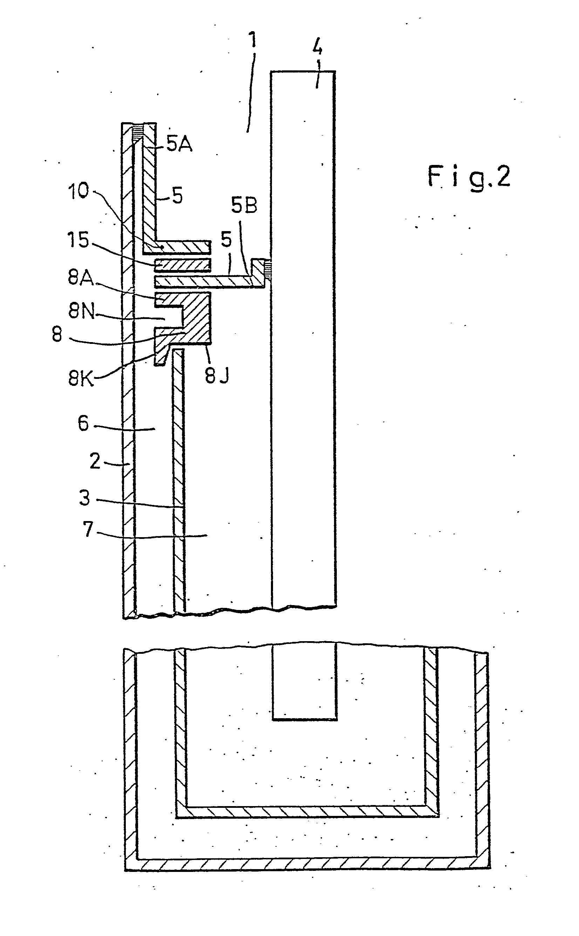

Figur 2 zeigt eine Variante der in Figur 1 dargestellten und in der dazugehörigen Beschreibung erläuterten Speicherzelle 1. Die hier dargestellte Speicherzelle 1 umfaßt wiederum ein Gehäuse 2 aus Metall, einen Festelektrolyten 3, einen Stromabnehmer 4 und einen Verschluß 5. Der Festelektrolyt 3 ist ebenfalls mit einem Isolierring 8 versehen. Dieser ist im wesentlichen wie der Isolierring 8 nach Figur 1 ausgebildet. Hierbei wurde lediglich auf die Anformung einer Isolierlippe 8 L verzichtet. Der Verschluß 5 der Speicherzelle 1 wird auch hierbei durch zwei Verschlußelemente 5 A und 5 B gebildet. Das Verschlußelement 5 A ist auch hierbei wiederum bereichsweise als Zylinder ausgebildet, der einen nach innen weisenden Flansch 10 besitzt. Das Verschlußelement 5 B hat die Form einer Ringscheibe. Der Durchmesser der Ringscheibe ist so groß gewählt, daß ihre äußere Kante in einer Ebene mit dem äußeren Rand des Isolierringes 5 liegt. Beide Verschlußelemente 5 A und 5 B sind aus Aluminium gefertigt. Das Verschlußelement 5 B ist direkt auf der Oberfläche des Isolierringes 8 angeordnet und durch das Thermo-Kompressionsverfahren mit diesem kraftschlüssig verbunden. Die Ringscheibe 5 B wird mittig von dem Stromabnehmer 4 durchsetzt, der in das Innere des Festelektrolyten 3 hineinragt und nach aussen einige mm über den Verschluß 5 übersteht. Zur Ausbildung einer sicheren Abdichtung ist der an den Stromabnehmer 4 angrenzende Rand der Ringscheibe 5 B geringfügig nach oben gezogen und mit dem Stromabnehmer 4 verschweißt. Auf die Oberseite der Ringseite 5 B ist im Bereich des Isolierringes 8 eine Ringscheibe 15 aus Alpha-Aluminiumoxid aufgelegt. Die Breite der Ringscheibe 15 entspricht in etwa der Breite des Isolierringes 8. Auf diese Ringscheibe 15 ist der Flansch 10 des ersten Verschlußelementes 5 A aufgesetzt. Die Breite des Flansches 10 ist so gewählt, daß eine äußere Begrenzung in einer Ebene mit der inneren Begrenzung des Isolierringes 8 abschließt. Das erste Verschlußelement 5 A ist ebenfalls durch die Anwendung des Thermo-Kompressionsverfahrens mit dem Isolierring 8 kraftschlüssig verbunden. Wie bereits oben erwähnt ist das Verbindungselement 5 A bereichsweise als Zylinder ausgebildet. Die Höhe des Zylinders ist so bemessen, daß das Verbindungselement 5 A in einer Ebene mit dem Gehäuse 2 abschließt. Die Außenfläche des Zylinders ist mit der Innenfläche des Gehäuses 2 kraftschlüssig verbunden. Bei dem hier beschriebenen Ausführungsbeispiel kann auch das Gehäuses 2 aus Aluminium hergestellt sein. Der Innenraum 7 des Festelektrolyten 3 dient hierbei als Kathodenraum. Der Raum 6 zwischen dem Gehäuse 2 und dem Festelektrolyten 3 bildet den Anodenraum. Die Funktion der beiden Reaktandenräume 6 und 7 kann auch bei dieser Speicherzelle problemlos vertauscht werden.

**Patentansprüche**

1. Elektrochemische Speicherzelle (1) auf der Basis von Alkalimetall und Chalkogen mit einem Anodenraum (7) und einem Kathodenraum (6), welche durch einen becherförmigen alkaliionenleitenden Festelektrolyten, der an seinem oberen Ende mit einem Isolierring (8) kraftschlüssig verbunden ist und in dessen Innenbereich ein stabförmiger Stromabnehmer (4) hineinragt, voneinander getrennt und mindestens bereichsweise von einem metallischen Gehäuse (2) begrenzt sind, und einem Verschluß mit zwei bereichsweise plattenförmig ausgebildeten Verschlußelementen (5A, 5B), wobei ein erstes Verschlußelement (5A) an dem Gehäuse (2) und ein zweites Verschlußelement (5B) an dem Stromabnehmer (4) befestigt ist und alle Verschlußelemente (5A, 5B) auf der gleichen Seite des Isolierrings (8) befestigt und gegeneinander isoliert sind, dadurch gekennzeichnet, daß das erste Verschlußelement (5A) als Zylinder ausgebildet ist, der einseitig mit einem nach innen weisenden Flansch (10) versehen ist, welcher über eine Aluminiumringscheibe (9A) auf dem Isolierring (8) angeordnet ist, daß das zweite Verschlußelement (5B) als Ringscheibe ausgebildet ist, deren äußerer Rand über eine Aluminiumringscheibe (9B) auf dem Isolierring (8) angeordnet und ebenso wie das erste Verschlußelement (5A) durch Thermokompression kraftschlüssig mit diesem verbunden ist, und daß die Isolierung zwischen den beiden Verschlußelementen (5A, 5B) durch eine auf der Oberseite des Isolierrings (8) angeformte Lippe (8L) gebildet ist, durch welche die beiden Verschlußelemente (5A, 5B) voneinander getrennt sind.

2. Elektrochemische Speicherzelle (1) auf der Basis von Alkalimetall und Chalkogen mit einem Anodenraum (7) und einem Kathodenraum (6), welche durch einen becherförmigen alkaliionenleitenden Festelektrolyten, der an seinem oberen Ende mit einem Isolierring (8) kraftschlüssig verbunden ist und in dessen Innenbereich ein Stabförmiger Stromabnehmer (4) hineinragt, voneinander getrennt und mindestens bereichsweise von einem metallischen Gehäuse (2) begrenzt sind, und einem Verschluß mit zwei bereichsweise plattenförmig ausgebildeten Verschlußelementen (5A, 5B), wobei ein erstes Verschlußelement (5A) an dem Gehäuse (2) und ein zweites Verschlußelement (5B) an dem Stromabnehmer (4) befestigt ist und alle Verschlußelemente (5A, 5B) auf der gleichen Seite des Isolierrings (8) befestigt und gegeneinander isoliert sind, dadurch gekennzeichnet, daß das erste Verschlußelement (5A) als Zylinder ausgebildet ist, der einseitig mit einem nach innen weisenden Flansch (10) versehen ist, der unter Zwischenfügen einer alpha-Aluminiumoxydringscheibe (15) auf das zweite als Ringscheibe ausgebildete Verschlußelement (5B) aufgelegt ist, welches direkt auf dem Isolierring (8) aufsitzt und daß die beiden Verschlußelemente (5A, 5B) miteinander und das zweite Verschlußelement und der Isolierung (8) durch Thermokompression verbunden sind.

3. Elektrochemische Speicherzelle nach Anspruch 1 oder 2, dadurch gekennzeichnet, daß alle Verschlußelemente (5A, 5B) aus Edelstahl gefertigt sind.

4. Elektrochemische Speicherzelle nach einem der Ansprüche 1 bis 3, dadurch gekennzeichnet, daß die Außenfläche des als Zylinder ausgebildeten Verschlußelements (5A) durch Thermokompression kraftschlüssig mit der Innenfläche des Gehäuses (2) verbunden ist.

5. Elektrochemische Speicherzelle nach einem der Ansprüche 1 bis 4, dadurch gekennzeichnet, daß der Außendurchmesser des als Zylinder ausgebildeten ersten Verschlußelements (5A) an den Innendurchmesser des Gehäuses (2) angepaßt ist.

6. Elektrochemische Speicherzelle nach einem der Ansprüche 1 bis 5, dadurch gekennzeichnet, daß der Isolierring (8) auf der nach außen weisenden Seite mit einer Ausnehmung (8N) für die Aufnahme eines Bondwerkzeuges versehen ist.

7. Elektrochemische Speicherzelle nach einem der Ansprüche 1 oder 2, dadurch gekennzeichnet, daß die beiden Verschlußelemente (5A, 5B) aus Aluminium gefertigt sind.

**Claims**

1. Electrochemical storage cell (1) based on alkali metal and chalkogen with an anode region (7) and a cathode region (6) which are separated from each other by a cup-shaped solid electrolyte which conducts alkali ions, which is non-positively joined at its upper end to an insulating ring (8) and into the interior of which projects a rod-shaped currend collector (4), and which are bounded at least in places by a metal casing (2), and with a seal consisting of two sealing elements (5A, 5B) which are constructed in places in a disc shape, a first sealing element (5A) being fixed to the casing (2) and a second sealing element (5B) being fixed to the current collector (4) and all the sealing elements (5A, 5B) being fixed to one side of the insulating ring (8) and insulated from each other, characterised in that the first sealing element (5A) is constructed as a cylinder which is provided with a flange (10) at one end, which points inwards and which is mounted on the insulating ring (8) via an aluminium annular disc (9A), that the second sealing element (5B) is constructed as an annular disc, the outer rim of which is mounted on the insulating ring (8) via an aluminium annular disc (9B) and, like the first sealing element (5A), is joined to the ring non-positively by thermal compression, and that the insulation between the two sealing elements (5A, 5B) is provided by a lip (8L) formed on the upper side of the insulating ring (8), by means of which lip the two sealing elements (5A, 5B) are separated from each other.

2. Electrochemical storage cell (1) based on alkali metal and chalkogen with an anode region (7) and a cathode region (6), which are separated from each other by a cup-shaped solid electrolyte which conducts alkali ions, which is non-positively joined at ist upper end to an insulating ring (8), and into the interior of which projects a rod-shaped current collector (4), and which are bounded at least in places by a metal casing (2), and with a seal consisting of two sealing elements (5A, 5B) which are constructed in places in a disc shape, a first sealing element (5A) being fixed to the casing (2) and a second sealing element (5B) being fixed to the current collector (4) and all the sealing elements (5A, 5B) being fixed to the same side of the insulating ring (8) and insulated from one another, characterised in that the first sealing element (5A) is constructed as a cylinder, which is provided with a flange (10), at one end, which points inward and which is placed on the second sealing element (5B) constructed as an annular disc with an alpha-aluminium oxide annular disc (15) being interposed, which sealing element rests immediately on top of the insulating ring (8), and that the two sealing elements (5A, 5B) are joined to each other and the second sealing element is joined to the insulation (8) by thermal compression.

3. Electrochemical storage cell according to Claim 1 or Claim 2, characterised in that all the sealing elements (5A, 5B) are made of high-grade steel.

4. Electrochemical storage cell according to one of the Claims 1 to 3, characterised in that the external surface of the sealing element (5A) constructed as a cylinder is joined non-positively to the internal surface of the casing (2) by thermal compression.

5. Electrochemical storage cell according to one of the Claims 1 to 4, characterised in that the outer diameter of the first sealing element (5A) constructed as a cylinder is matched to the internal diameter of the casing (2).

6. Electrochemical storage cell according to one of the Claims 1 to 5, characterised in that the insulating ring (8) is provided on the side pointing outwards with a recess (8N) for receiving a bonding tool.

7. Electrochemical storage cell according to one of the Claims 1 or 2, characterised in that the two sealing elements (5A, 5B) are made of aluminium.

**Revendications**

1. Elément (1) d'accumulateur électrochimique utilisant un couple métal alcalin-chalcogène, avec un compartiment anodique (7) et un compartiment cathodique (6) qui sont séparés l'un de l'autre par un électrolyte solide conduisant les ions alcalins et en forme de godet sur l'extrémité supérieure duquel est montée en force une bague isolante (8) et à l'intérieur duquel pénètre un collecteur de courant (4) en forme de barreau, et qui sont délimités au moins partiellement par un boîtier métallique (2) et par un obturateur comprenant deux éléments d'obturation (5A, 5B) partiellement en forme de plaques, le premier élément d'obturation (5A) étant fixé sur le boîtier (2) et le deuxième élément d'obturation (5B) sur le collecteur de courant (4), et les deux éléments d'obturation (5A, 5B) étant fixés sur le même côté de la bague isolante (8) et isolés l'un vis-à-vis de l'autre, caractérisé en ce que le premier élément d'obturation (5A) est réalisé sous la forme d'un cylindre pourvu d'un côté d'une bride (10) orientée vers l'intérieur et disposée par l'intermédiaire d'une rondelle en aluminium (9A) sur la bague isolante (8), que le deuxième élément d'obturation (5B) est réalisé sous la forme d'une rondelle dont le bord extérieur est disposé par l'intermédiaire d'une rondelle en aluminium (9B) sur la bague isolante (8) et qui, de même que le premier élément d'obturation (5A), est assemblée en force par thermocompression avec la bague isolante (8), et que l'isolation entre les deux éléments d'obturation (5A, 5B) est réalisée par une lèvre (8L) formée sur le côté supérieur de la bague isolante (8), la lèvre (8L) séparant les deux éléments d'obturation (5A, 5B).

2. Elément (1) d'accumulateur électrochimique utilisant un couple métal alcalin-chalcogène, avec un compartiment anodique (7) et un compartiment cathodique (6) qui sont séparés l'un de l'autre par un électrolyte solide conduisant les ions alcalins et en forme de godet sur l'extrémité supérieure duquel est montée en force une bague isolante (8) et à l'intérieur duquel pénètre un collecteur de courant (4) en forme de barreau, et qui sont délimités au moins partiellement par un boîtier métallique (2) et par un obturateur comprenant deux éléments d'obturation (5A, 5B) partiellement en forme de plaques, le premier élément d'obturation (5A) étant fixé sur le boîtier (2) et le deuxième élément d'obturation (5B) sur le collecteur de courant (4), et les deux éléments d'obturation (5A, 5B) étant fixés sur le même côté de la bague isolante (8) et isolés l'un vis-à-vis de l'autre, caractérisé en ce que le premier élément d'obturation (5A) est réalisé sous la forme d'un cylindre pourvu d'un côté d'une bride (10) orientée vers l'intérieur qui est placée sur le deuxième élément d'obturation (5B) en forme de rondelle en intercalant une rondelle (15) en alpha-alumine, le deuxième élément d'obturation (5B) reposant directement sur la bague isolante (8), et que les deux éléments d'obturation (5A, 5B) sont assemblés l'un avec l'autre, et le deuxième élément d'obturation avec la bague isolante (8), par thermocompression.

3. Elément d'accumulateur électrochimique selon la revendication 1 ou 2, caractérisé en ce que les deux éléments d'obturation (5A, 5B) sont réalisés en acier inoxydable.

4. Elément d'accumulateur électrochimique selon l'une des revendications 1 à 3, caractérisé en ce que la face extérieure de l'élément d'obturation (5A) en forme de cylindre est assemblée en force par thermocompression avec la face intérieure du boîtier (2).

5. Elément d'accumulateur électrochimique selon l'une des revendications 1 à 4, caractérisé en ce que le diamètre extérieur du premier élément d'obturation (5A) en forme de cylindre est adapté au diamètre intérieur du boîtier (2).

6. Elément d'accumulateur électrochimique selon l'une des revendications 1 à 5, caractérisé en ce que la bague isolante (8) est dotée sur son côté orienté vers l'extérieur d'un évidement (8N) destiné à recevoir un outil d'assemblage.

7. Elément d'accumulateur électrochimique selon la revendication 1 ou 2, caractérisé en ce que les deux éléments d'obturation (5A, 5B) sont réalisés en aluminium.

Fig.1

Fig.2